# FASCICULE DE BREVET EUROPEEN

(11) **EP 3 886 135 B1**
(45) Date de publication et mention de la délivrance du brevet: **07.09.2022**
(21) Numéro de dépôt: 21164388.7
(22) Date de dépôt: 23.03.2021
(51) Int. Cl.: H01H 71/02, H01H 89/06, H02B 1/04

(54) **DISPOSITIF ÉLECTRIQUE POUR L'ALIMENTATION ÉLECTRIQUE D'APPAREILS ÉLECTRIQUES DE PUISSANCE**
ELEKTRISCHE VORRICHTUNG FÜR DIE STROMVERSORGUNG VON ELEKTRISCHEN LEISTUNGSGERÄTEN
ELECTRICAL DEVICE FOR THE POWER SUPPLY OF ELECTRICAL POWER APPARATUS

(30) Priorité: 24.03.2020 FR 2002858
(43) Date de publication de la demande: 29.09.2021
(73) Titulaire: Schneider Electric Industries SAS, 92500 Rueil-Malmaison (FR)
(72) Inventeur: DELBAERE, Stephane, 38000 Grenoble (FR); JARRIGE, Christian, 38000 Grenoble (FR); BELIN, Yves, 38000 Grenoble (FR)
(74) Mandataire: Lavoix

(56) Documents cités:
- FR-A1- 2 761 539
- FR-A1- 2 805 094
- FR-A1- 3 069 716

## Description

La présente invention concerne un dispositif électrique pour l'alimentation électrique d'appareils électriques de puissance.

Dans le domaine de l'alimentation électrique d'appareils électriques de puissance tels que des moteurs électriques, il est connu d'utiliser des dispositifs électriques qui permettent de fournir de façon contrôlée une alimentation électrique à un ou plusieurs appareils de puissance. Par exemple, plusieurs moteurs électriques sont connectés à un tel dispositif électrique, pour former un ensemble dit de départs moteurs. Ce dispositif est configuré pour recevoir un courant électrique d'alimentation, généralement multiphasé, et pour le redistribuer vers plusieurs lignes d'alimentation, chacune connectée à un ou des moteurs électriques. Ce dispositif permet d'assurer un pilotage de chacun de ces moteurs, par exemple en permettant une interruption sélective du courant qui circule dans les lignes d'alimentation.

FR-3 069 716-A1 décrit un exemple d'un tel dispositif électrique, qui présente une structure modulaire dans laquelle les lignes d'alimentation sont chacune connectée à un connecteur amovible, qui peut être remplacé lors d'opération de maintenance. Chaque connecteur amovible comprend un dispositif de commutation, qui empêche ou autorise la circulation du courant électrique dans les lignes d'alimentation. Or le dispositif de commutation s'use à chaque cycle de fermeture / ouverture du circuit. Lorsque le dispositif de commutation est défaillant, il faut remplacer l'ensemble du connecteur amovible, ce qui impose de débrancher entièrement la ligne d'alimentation, ce qui est peu pratique, notamment lorsque le moteur connecté au dispositif électrique est un moteur triphasé, qui demande de bien respecter le branchement aux phases électriques d'alimentation.

C'est à ces inconvénients qu'entend plus particulièrement remédier l'invention, en proposant un dispositif électrique pour l'alimentation électrique de plusieurs appareils électriques de puissance qui soit pratique d'utilisation, notamment lors du remplacement de pièces défectueuses.

À cet effet, l'invention concerne un dispositif électrique pour l'alimentation électrique de plusieurs appareils de puissance, qui comprend un support fixe et plusieurs blocs contacteurs. Le support fixe comprend des terminaux d'entrée, pour recevoir un courant de puissance polyphasé, et un circuit de distribution configuré pour répartir le courant de puissance vers des lignes de puissance comprenant chacune plusieurs lignes d'alimentation monophasée, le support fixe comprenant autant de lignes de puissance que le dispositif électrique comprend de blocs contacteurs et chaque ligne de puissance comprenant autant de lignes d'alimentation que le courant de puissance comprend de phases, chacune des lignes d'alimentation d'un bloc contacteur étant reliée à une phase respective du courant de puissance, les lignes d'alimentation étant accessibles à l'extérieur du support fixe par des terminaux intermédiaires. Chaque bloc contacteur comprend des lignes secondaires, chacune reliée à une ligne d'alimentation respective par l'intermédiaire d'un terminal intermédiaire respectif, les blocs contacteurs étant déplaçables entre une position assemblée, dans laquelle chaque ligne secondaire est électriquement connectée à une ligne primaire propre par l'intermédiaire d'un terminal intermédiaire et est accessible à l'extérieur du bloc contacteur par un bornier de sortie, et une position désassemblée, dans laquelle chaque ligne secondaire n'est pas reliée à une ligne primaire. Chaque bloc contacteur comprend, en outre, un dispositif de commutation, qui est commutable entre une position ouverte, dans laquelle toutes les lignes secondaires de ce bloc contacteur sont ouvertes, et une position fermée, dans laquelle toutes les lignes secondaires de ce bloc contacteur sont fermées et n'empêchent pas le passage du courant entre les terminaux intermédiaires et le bornier de sortie. Selon l'invention, le dispositif électrique comprend aussi un bloc de commande, déplaçable entre une position assemblée, dans laquelle le bloc de commande coopère mécaniquement et électriquement avec le reste du dispositif électrique, et une position désassemblée, dans laquelle le bloc de commande ne coopère ni mécaniquement ni électriquement avec le reste du dispositif électrique. Lorsque le bloc de commande est en position assemblée, chaque bloc contacteur est, d'une part, maintenu en position assemblée, un dispositif électronique de contrôle du bloc de commande étant aussi connecté au dispositif de commutation de chacun des blocs contacteurs, le dispositif électronique de contrôle étant configuré pour piloter la commutation de chaque dispositif de commutation indépendamment des autres dispositifs de commutation. Lorsque le bloc de commande est en position désassemblée, le dispositif de commutation de chacun des blocs contacteur est à l'état ouvert, tandis que chacun des blocs contacteurs est déplaçable entre sa position assemblée et sa position désassemblée, indépendamment des autres blocs contacteurs. La connexion électrique entre les lignes secondaires et les appareils de puissance est assurée par l'intermédiaire de connecteurs, chaque connecteur pouvant être déconnecté du ou des borniers de sortie correspondants lorsque le ou les blocs contacteurs correspondants sont en position désassemblée.

Grâce à l'invention, le bloc de commande du dispositif électrique doit être désassemblé du reste du dispositif électrique avant de pouvoir désassembler un bloc contacteur et le connecteur associé. Ainsi, le bloc contacteur est mis hors tension de façon certaine, et il peut être remplacé en toute sécurité. D'autre part, pendant cette opération, les lignes d'alimentation des appareils de puissance restent connectées au connecteur, ce qui permet, une fois le bloc contacteur défectueux remplacé, de rebrancher le connecteur au bloc contacteur remplacé, sans avoir à s'inquiéter d'une éventuelle inversion de phases. La mémoire de câblage est ainsi préservée.

Selon des aspects avantageux mais non obligatoires de l'invention, un tel dispositif électrique peut incorporer une ou plusieurs des caractéristiques suivantes, prises isolément ou suivant toute combinaison techniquement admissible :
- chaque bloc contacteur comprend un organe de verrouillage, déplaçable par un opérateur entre une position verrouillée, dans laquelle ce bloc contacteur est maintenu en position assemblée, et une position déverrouillée, dans laquelle ce bloc contacteur est déplaçable entre sa position assemblée et sa position désassemblée, alors que lorsque le bloc de commande est en position assemblée, l'organe de verrouillage de chaque bloc contacteur en position assemblée est maintenu en position verrouillée, et que lorsque le bloc de commande est en position désassemblée, l'organe de verrouillage de chaque bloc contacteur est accessible à un opérateur et est déplaçable entre la position verrouillée et la position déverrouillée ;
- l'organe de verrouillage comprend une tige avec une première extrémité et une deuxième extrémité opposée, la tige étant mobile en translation par rapport au bloc contacteur correspondant, alors que la première extrémité de l'organe de verrouillage en position verrouillée dépassant d'une face inférieure du bloc contacteur correspondant, et qu'en position assemblée du bloc contacteur, la première extrémité de l'organe de verrouillage en position verrouillée coopère avec un logement complémentaire ménagé dans le support fixe de manière à empêcher les mouvements du bloc contacteur, tandis que la deuxième extrémité est bloquée en translation par le bloc de commande en position assemblée ;
- le support comprend une platine et un montant orthogonal à la platine suivant une arête définissant une direction transversale du support, alors qu'une gorge débouchant sur une face frontale du montant est ménagée dans le montant suivant une direction parallèle à et à distance d'une arête de jonction entre la platine et le montant, que chaque bloc contacteur comprend une protubérance, qui coopère avec la gorge dans une configuration engagée du bloc contacteur correspondant, dans laquelle ce bloc contacteur est mobile en rotation par rapport au support autour de l'axe de la gorge, ce bloc contacteur étant en position assemblée lorsque ce bloc contacteur est à la fois en configuration engagée et en butée contre le support fixe, et que chaque ligne secondaire de ce bloc contacteur est connectée au terminal intermédiaire correspondant lorsque ce bloc contacteur est en configuration engagée et arrive en butée contre le support fixe ;

- le bloc de commande comprend un organe de blocage, déplaçable par un opérateur entre une position bloquée, dans laquelle l'organe de blocage coopère avec le reste du dispositif électrique de manière que le bloc de commande n'est pas déplaçable par un opérateur entre la position assemblée et la position désassemblée du bloc de commande, et une position déverrouillée, dans laquelle le bloc de commande est déplaçable par un opérateur entre les positions assemblée et désassemblée de ce bloc de commande ;
- le support fixe intègre un dispositif de mesure, qui est configuré pour mesurer un courant circulant dans chacune des lignes d'alimentation et pour transmettre au dispositif de contrôle des informations relatives aux valeurs des mesures de courant ;
- le dispositif de mesure comprend une interface de connexion, ménagée dans une partie supérieure du support, et que le bloc de commande comprend une interface complémentaire à l'interface de connexion, l'interface de connexion et l'interface complémentaires étant connectées entre elles lorsque le bloc de commande est en position assemblée ;
- le bloc de commande comprend des organes de guidage qui coopèrent avec des organes complémentaires ménagés sur le reste du dispositif électrique de manière à guider le bloc de commande lors de l'assemblage au reste du dispositif électrique suivant un mouvement de translation, et que la connexion entre l'interface de connexion et l'interface complémentaire se fait conjointement au mouvement de translation du bloc de commande lors de son assemblage au reste du dispositif ;
- le dispositif électrique comprend quatre blocs contacteurs, et
- le bloc de commande comprend une interface de communication reliée au dispositif électronique de contrôle, configurée pour permettre à un opérateur d'envoyer des commandes au dispositif électronique de contrôle et de recevoir des informations en provenance du dispositif électronique de contrôle.

L'invention sera mieux comprise et d'autres avantages de celle-ci apparaitront plus clairement à la lumière de la description qui va suivre, d'un mode de réalisation d'un dispositif électrique conforme à son principe, donnée uniquement à titre d'exemple et faite en référence aux dessins annexés, dans lesquels :
- [Fig.1] la figure 1 est un schéma synoptique d'un dispositif électrique conforme à l'invention ;
- [Fig.2] la figure 2 est une vue en perspective du dispositif de la figure 1, représentée dans une configuration assemblée ;
- [Fig.3] la figure 3 est une coupe du dispositif électrique des figures 1 et 2, suivant un plan III sur la figure 2 ;
- [Fig.4] la figure 4 est une vue analogue à la figure 2, certains éléments du dispositif électrique étant dans une position désassemblée ;
- [Fig.5] la figure 5 est une coupe du dispositif électrique de la figure 1 suivant un plan V sur la figure 2, le dispositif électrique étant représentée dans une autre configuration désassemblée, certains éléments étant omis pour faciliter la lecture, et
- [Fig.6] la figure 6 est une vue en perspective du dispositif électrique de la figure 2, représenté dans une autre configuration désassemblée, certains éléments étant omis pour faciliter la lecture.

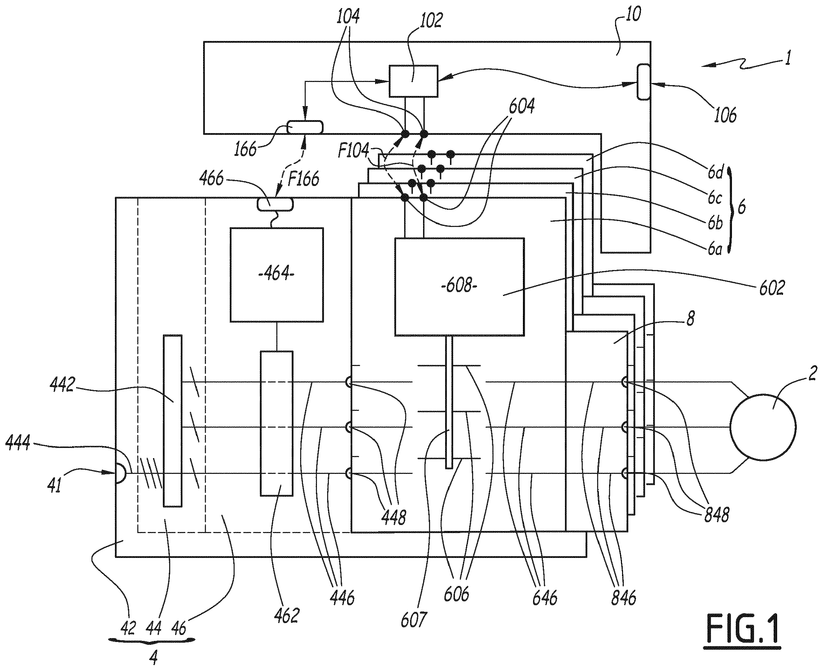

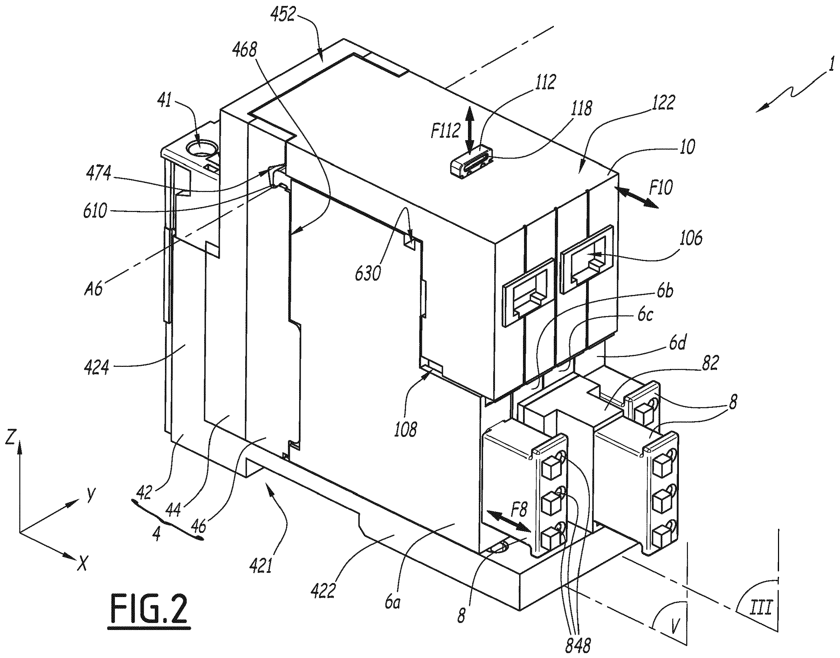

Un dispositif électrique 1 est représenté sur les figures 1 et 2. Le dispositif électrique 1 est configuré pour commander l'alimentation électrique d'appareils électriques de puissance tels que des moteurs électriques. Un unique moteur électrique 2 est représenté seulement sur la figure 1. Le moteur électrique 2 représenté sur la figure 1 ne fait pas partie de l'invention mais sert uniquement à en préciser le contexte.

Le dispositif 1 comporte ici une entrée d'alimentation électrique et plusieurs sorties d'alimentation électrique, entre lesquelles est redistribué un courant d'alimentation électrique reçu sur l'entrée d'alimentation. Les sorties d'alimentation sont configurées pour être chacune connectées à un appareil de puissance et pour piloter cet appareil de puissance, en autorisant l'interruption sélective de l'alimentation électrique de cet appareil de puissance. Dans certains cas, deux sorties d'alimentation sont connectées à un même appareil de puissance, comme expliqué ci-après dans la présente description.

Par exemple, le dispositif 1 est utilisé au sein d'un ensemble de départ moteur pour commander l'alimentation électrique de plusieurs moteurs électriques à courant alternatif.

Le dispositif 1 comporte un support fixe 4, auxquels sont assemblés des blocs contacteurs 6, ici au nombre de quatre et référencés individuellement 6a, 6b, 6c et 6d.

Avantageusement, les blocs contacteurs 6a à 6d fonctionnent de la même façon, voire sont identiques les uns aux autres. Les blocs contacteurs 6a à 6d sont ainsi interchangeables, ce qui facilite le remplacement d'un bloc contacteur 6 lors d'une opération de maintenance et permet de réduire les coûts par standardisation.

Chacun des blocs contacteurs 6 présente un bornier de sortie, non représenté, qui est connecté, selon les cas, à un connecteur 8 respectif ou à un connecteur intermédiaire 82. Sur la figure 2, les blocs contacteurs 6a et 6d sont chacun connectés à un connecteur 8, tandis que les blocs contacteurs 6b et 6c, qui sont voisins, sont reliés à un même connecteur intermédiaire 82, ce connecteur intermédiaire 82 étant lui-même relié à un connecteur 8.

Les connecteurs 8 ou 82 sont connectés aux blocs contacteurs 6 correspondants par un mouvement de translation du connecteur 8 ou 82 par rapport au bloc contacteur 6, ce mouvement de translation étant représenté par une double flèche F8 sur les figures.

Chacun des connecteurs 8 est configuré pour être électriquement relié à un appareil électrique de puissance. Sur la figure 1, l'appareil de puissance 2 est relié au connecteur 8 du bloc contacteur 6a, tandis que les autres connecteurs 8 ne sont pas reliés à un appareil de puissance.

Chaque connecteur 8 présente avantageusement une forme asymétrique, comprenant par exemple un ergot détrompeur, non représenté, de sorte que chaque connecteur 8 ne puisse être connecté à un bloc contacteur 6 ou à un connecteur intermédiaire 82 que dans un seul sens, permettant ainsi de conserver, après chaque cycle de déconnexion / reconnexion, une correspondance entre les phases de l'appareil de puissance et les phases des lignes secondaires 646, ce qui constitue la « mémoire de câblage ».

Le dispositif électrique 1 comprend aussi un bloc de commande 10. Sur la figure 1, le bloc de commande 10 est représenté désassemblé du reste du dispositif 1 pour mieux expliquer les interfaces entre le bloc de commande 10 et le reste du dispositif 1, comme décrit ci-après. Sur la figure 2, le bloc de commande 10 est représenté assemblé au reste du dispositif 1, dans une configuration assemblée du dispositif électrique 1.

Le dispositif 1 comprend en outre des terminaux d'entrée 41 pour recevoir un courant électrique polyphasé, tel qu'un courant triphasé destiné à alimenter les moteurs électriques. Les terminaux d'entrée 41 sont par exemple connectés à une source d'alimentation électrique extérieure au dispositif 1. Par exemple, pour un courant électrique triphasé, les terminaux d'entrée 41 sont formés par trois conducteurs électriques distincts, chacun associé à une phase du courant électrique. Les terminaux d'entrée 41 sont ici disposés au moins partiellement à l'intérieur du support fixe 4.

Le support fixe 4 comprend, en outre, une embase 42, un module de distribution 44 et un module de protection 46. Dans l'exemple illustré, le support fixe 4 est destiné à être installé au sein d'un tableau électrique, l'embase 42 comprenant divers organes de fixation mécanique, tel qu'un logement 421 configuré pour coopérer par exemple avec un rail de d'un tableau électrique, le rail et le tableau n'étant pas représentés.

Le module de distribution 44 comporte un circuit de distribution 442, qui est, d'une part, connecté aux terminaux d'entrée 41 par l'intermédiaire d'une première ligne de puissance 444 et, d'autre part, connecté à des lignes d'alimentation 446. Le circuit de distribution 442 est ainsi configuré pour répartir le courant polyphasé de la ligne de puissance 444 vers chacune des lignes d'alimentation 446 monophasées. Dans l'exemple, la ligne de puissance 444 comporte trois phases, chaque phase étant acheminée par une ligne d'alimentation 446, qui sont donc au nombre de trois. Les lignes d'alimentation 446 sont adaptées pour acheminer chacune un courant électrique d'alimentation depuis le circuit de distribution 442 vers un appareil électrique correspondant en aval du dispositif 1. Chacun des blocs contacteurs 6a à 6d est ainsi relié aux lignes d'alimentation 446 au moyen de terminaux intermédiaires 448, qui sont fixes et font partie du support 4. Les terminaux intermédiaires 448 comportent par exemple plusieurs conducteurs électriques distincts, ici au nombre de trois, chacun associé à une phase du courant électrique acheminé par la ligne de puissance 444.

Le module de protection 46 comprend un dispositif de mesure 462, qui est ici configuré pour mesurer un courant électrique circulant au sein de chacune des lignes d'alimentation 446. Le dispositif de mesure 462 est relié à un contrôleur 464, configuré pour recevoir les mesures en provenance du dispositif de mesure 462, le contrôleur 464 étant lui-même connecté à une interface 466 accessible depuis l'extérieur du support 4. Le contrôleur 464 est par exemple configuré pour générer un signal d'alerte lorsque le courant mesuré dans l'une des lignes d'alimentation en 446 au moyen du dispositif de mesure 462 est supérieur à une valeur prédéterminée, indiquant par exemple un dysfonctionnement de l'un des appareils de puissance connecté en aval au dispositif électrique 1.

Dans l'exemple illustré, l'embase 42, le module de distribution 44 et le module de protection 46 sont des modules assemblés les uns aux autres lors de la fabrication du support 4, et ne sont pas destinés à être démontés par un opérateur. En variante, l'embase 42, les modules de distribution et de protection 44 et 46 peuvent être démontables. Selon une autre variante, l'embase 42 et les modules 44 et 46 sont intégrés dans un même boîtier.

Chacun des blocs contacteurs 6a à 6d comprend plusieurs lignes secondaires 646, qui sont chacune connectées à une ligne d'alimentation 446 respective au niveau des terminaux intermédiaires 448. Dans l'exemple illustré, chaque bloc contacteur 6a à 6d comprend ainsi trois lignes secondaires, correspondantes chacune à une des phases de la ligne de puissance 444 qui est ici triphasé.

Chaque contacteur 8 comprend des lignes terminales 846, chacune connectée à une ligne secondaire 646 respective du bloc contacteur 6a à 6d sur lequel le connecteur 8 est monté. Dans l'exemple, chacun des connecteurs 8 comprend ainsi trois lignes terminales 846, correspondant à l'une des phases du courant acheminé par la ligne de puissance 444, ici triphasée.

Chacune des lignes terminales 846 est accessible depuis l'extérieur du connecteur 8 correspondant par l'intermédiaire d'un terminal de sortie 848. Dans l'exemple illustré, le moteur 2 est ainsi connecté aux trois terminaux de sortie 848 du connecteur 8 assemblé au bloc contacteur 6a.

Chaque bloc contacteur 6a à 6d comprend, en outre, un dispositif de commutation 602, qui est commutable entre une position ouverte, dans laquelle toutes les lignes secondaires 646 de ce bloc contacteur 6a à 6d sont ouvertes et empêchent un courant de circuler au travers des lignes secondaires 646 de ce bloc, et une position fermée, dans laquelle toutes les lignes secondaires 646 de ce bloc contacteur 6a à 6d n'empêchent pas le passage du courant.

Le dispositif de commutation 602 de chaque bloc contacteur 6a à 6d est configuré pour être piloté par l'intermédiaire d'une interface de commande 604, qui est accessible depuis l'extérieur des blocs contacteurs 6a à 6d en position assemblée au support 4.

Dans l'exemple illustré, chaque dispositif de commutation 602 comprend des contacts mobiles 606, chaque contact mobile 606 étant associé à une ligne secondaire 646 respective. Les contacts mobiles 606 d'un même bloc contacteur 6 sont solidaires d'une tige 607, qui est déplacée au moyen d'un dispositif électromagnétique comprenant une bobine 608, laquelle est reliée à l'interface de commande 604. Chaque dispositif de commutation 602 comprend un organe élastique, par exemple un ressort, non représenté, qui repousse la bobine 608 dans une position dite « de repos », dans laquelle les contacts mobiles 606 ne sont pas reliés aux lignes secondaires 646 respectives et dans laquelle le dispositif de commutation 602 est en position ouverte

Ainsi, lorsqu'aucune tension électrique n'est appliquée au niveau de l'interface de commande 604, en particulier lorsque l'interface de commande 604 n'est connecté à aucun autre appareil, la bobine 608 est dans la position de repos et le dispositif de commutation 602 est en position ouverte.

Plus généralement, le dispositif de commutation 602 est pilotable à partir de l'interface de commande 604.

Le bloc de commande 10 comprend un dispositif électronique 102 de contrôle, qui est relié à une interface 104, accessible depuis l'extérieur du bloc de commande 10.

Selon des modes de réalisation, le dispositif électronique 102 de contrôle comporte une unité logique de calcul (CPU), telle qu'un microcontrôleur programmable ou un microprocesseur ou équivalent, et une mémoire informatique formant un support d'enregistrement de données lisibles par ordinateur.

Selon des exemples, la mémoire est une mémoire ROM, ou une mémoire RAM, ou une mémoire non volatile du type EPROM ou FLASH ou équivalent. La mémoire comporte des instructions exécutables et/ou du code informatique pour assurer le fonctionnement du dispositif de contrôle 102 conformément à un ou plusieurs des modes de réalisation décrits ci-après lorsqu'exécuté par l'unité logique de calcul.

En configuration assemblée du dispositif électrique 1, l'interface 104 du bloc de commande 10 est connectée à chacune des interfaces de commande 604 des blocs contacteurs 6. La coopération entre l'interface de commande 604 et l'interface 104 du bloc de commande 10 est représenté par deux doubles flèches en pointillés F104. Le dispositif électronique de contrôle 102 est connecté au dispositif de commutation 602 de chacun des blocs contacteurs 6a à 6d et est configuré pour piloter la commutation de chaque dispositif de commutation 602 indépendamment des autres dispositifs de commutation 602. Autrement dit, en position assemblée, le bloc de commande 10 coopère électriquement avec le reste du dispositif électrique 1.

Lorsque le bloc de commande 10 est en position désassemblée, le dispositif de commutation 602 de chaque bloc contacteur 6a à 6d est à l'état ouvert, c'est-à-dire qu'aucun courant électrique ne peut circuler au sein des lignes secondaires 646. Les blocs contacteurs 6a à 6d peuvent être ainsi désassemblés du support fixe 4 en toute sécurité.

Le bloc de commande 10 comprend aussi une interface de contrôle 166, qui est relié au dispositif électronique de contrôle 102 et qui coopère, en configuration assemblée du dispositif électrique 1, avec l'interface 466 du contrôleur 464. La coopération entre l'interface de contrôle 166 et l'interface 466 est représentée par une double flèche en pointillés F166. Le dispositif de contrôle 102 est ainsi configuré pour échanger des informations avec le contrôleur 464, en particulier des informations sur des valeurs de mesure de courant passant dans chacune des lignes d'alimentation 446.

Le bloc de commande 10 comprend, en outre, une interface de communication 106, qui est reliée au dispositif électronique de contrôle 102 et qui est configurée pour permettre l'échange d'information entre un opérateur et le dispositif de contrôle 102. Dans l'exemple illustré, l'interface de communication 106 est un connecteur de branchement au format RJ45, accessible depuis l'extérieur du bloc de commande 10 lorsque le dispositif électrique 1 est en configuration assemblée. Optionnellement, l'interface de communication 106 intègre des moyens de communication sans fil, ou bien encore une interface visuelle, visible par un opérateur et qui présente à cet opérateur des informations sur un état de fonctionnement du dispositif électrique 1.

Sur la figure 2, les deux blocs contacteurs 6b et 6c, qui sont voisins, sont reliés à un même connecteur intermédiaire 82, dit aussi « inverseur », lui-même connecté à un seul connecteur 8. Les lignes secondaires 646 des blocs contacteurs 6b ou 6c sont ainsi reliées aux terminaux de sortie 848 du connecteur 8 relié aux connecteurs intermédiaires 82 selon l'état ouvert ou fermé des dispositifs de commutation 602 des blocs contacteurs 6b ou 6c. Un connecteur intermédiaire 82 du type inverseur est par exemple utilisé pour piloter le démarrage et l'arrêt d'un moteur électrique selon un principe connu.

Dans l'exemple illustré sur les figures 2 à 6, l'embase 42 du support 4 présente une forme de L, avec une platine 422 et un montant 424. La platine 422 présente une forme de plaque rectangulaire, qui s'étend suivant un plan supposé horizontal sur les figures. Le montant 424 présente une forme de parallélépipède allongé disposé verticalement, c'est-à-dire perpendiculairement à la platine 422. Dans la présente description, les notions de haut, bas, dessus, dessous, avant, arrière, etc., sont définies en relation à l'orientation du dispositif électrique 1 sur les figures, sans présumer d'un quelconque sens d'utilisation du dispositif électrique 1 en pratique.

Par commodité, on définit un repère orthonormé X, Y et Z de manière que l'axe Z est orienté perpendiculairement à la platine 422, l'axe X est orienté perpendiculairement au montant 424, l'axe Y étant parallèle à une arrête de jonction entre la platine 422 et le montant 424. La platine 422 présente ainsi une face supérieure 426, orientée vers le haut, c'est-à-dire orthogonalement à la direction de l'axe Z.

Dans l'exemple illustré, les modules de distribution 44 et de protection 46 présentent chacun une forme sensiblement parallélépipédique allongée, et s'étendent chacun dans leur longueur parallèlement au montant 424, le montant 424, le module de distribution 44 et le module de protection 46 étant accolés les uns aux autres.

Les terminaux intermédiaires 448 sont ménagés sur une portion basse d'une face frontale 468 du module de protection 46, tandis que l'interface 466 est située sur une face supérieure 470 du module de protection 46. La face frontale 468 est orthogonale à la direction de l'axe X, tandis que la face supérieure 470 est orthogonale à la direction de l'axe Z.

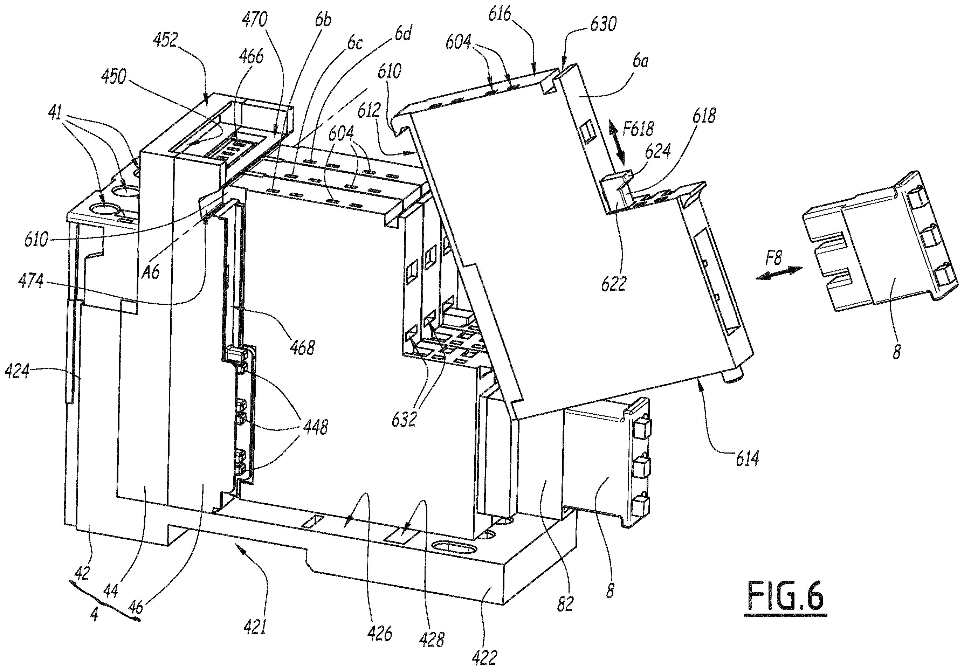

Des guides 472, visibles sur la figure 6, sont ménagés de part et d'autre des terminaux intermédiaires 448 de manière à guider les blocs contacteurs 6a à 6d lors de leur assemblage au support 4, comme décrit ci-après.

Un logement 450 est ménagé dans une face supérieure 452 du module de distribution 44, logement 450 débouchant vers l'avant, c'est-à-dire dans la direction de l'axe X, sur l'interface 466 de connexion. L'interface de connexion 466 est configurée pour être connectée à une interface complémentaire suivant un mouvement de translation parallèle à l'axe X.

Une gorge 474 est ménagée dans la face frontale 468 à proximité de l'arrête de jonction entre la face frontale 468 et la face supérieure 470 parallèlement à la direction de l'axe Y. La gorge 474 coopère avec une protubérance 610 ménagée sur chacun des blocs contacteurs 6a à 6d, de manière qu'en position rassemblée de chaque bloc contacteur 6a à 6d, une face arrière 612 de ce bloc contacteur 6a à 6d coopère mécaniquement avec la face frontale 468 du module de protection 46, tandis qu'une face inférieure 614 de ce bloc contacteur 6a à 6d est en appui sur la surface supérieure 426 de la platine 422.

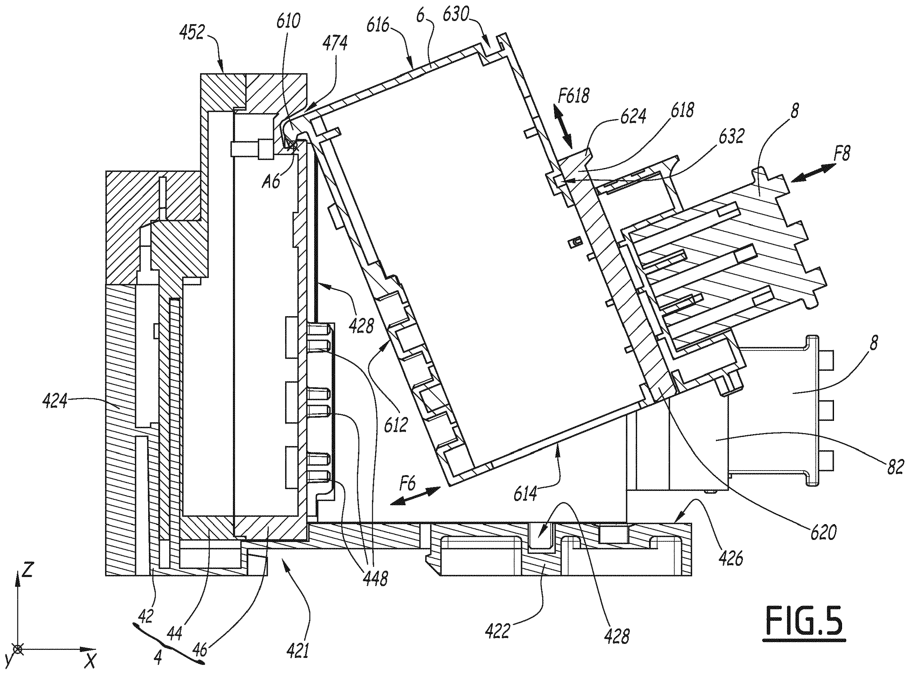

Dans l'exemple illustré, la protubérance 610 présente une forme de crochet orienté vers le bas en position assemblée, tandis que la gorge 474 présente une forme complémentaire, configurée pour, lorsque la protubérance 610 de l'un des blocs contacteurs 6a à 6d coopère avec la gorge 474 dans une configuration dite engagée, telle que représentée sur les figures 2 à 5, le mouvement de ce bloc contacteur 6a ou 6d par rapport au support fixe 4 est un mouvement de rotation, autour d'un axe A6 parallèle à la direction de l'axe Y et passant au voisinage du lieu de contact entre la protubérance 610 et la gorge 474. Le mouvement de rotation du bloc contacteur 6a à 6d au support fixe 4 est représenté sur la figure 5 par une double flèche F6, qui est une portion d'arc de cercle centré sur l'axe A6. Par extension, on dit que l'un des blocs contacteur 6a à 6d est en configuration engagée lorsque la protubérance 610 de ce bloc contacteur coopère avec la gorge 474 et que le mouvement de ce contacteur par rapport au support fixe 4 est un mouvement de rotation suivant la flèche F6, tandis que la position assemblée de ce contacteur 6a à 6d correspond à la situation où, d'une part, ce contacteur 6A à 6d est en configuration engagée et où, d'autre part, la face arrière 612 est en appui sur la face frontale 468 du support 4 et la face inférieure 614 est en appui sur la face supérieure 426 de la platine 422.

Chaque bloc contacteur 6a à 6d comprend un organe de verrouillage, qui permet de bloquer le mouvement de rotation suivant la flèche F6 de chaque bloc contacteur 6a à 6d par rapport au support 4 autour de l'axe A6 lorsque ce bloc contacteur 6a à 6d est en position assemblée.

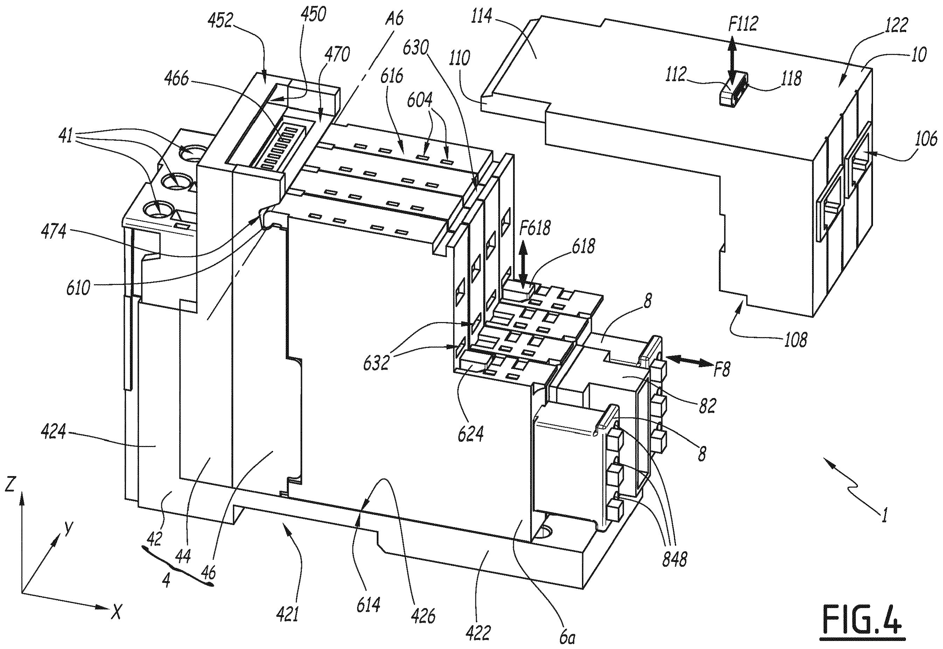

L'organe de verrouillage de chaque bloc contacteur 6a à 6d est déplaçable par un opérateur entre une position verrouillée, dans laquelle ce bloc contacteur 6a à 6d est maintenu en position assemblée, et une position déverrouillée, dans laquelle ce bloc contacteur 6a à 6d est déplaçable entre sa position assemblée, telle que représentée sur la figure 4, et une position intermédiaire représentée sur la figure 5, dans laquelle le bloc contacteur 6a est en position engagée sans être connecté au terminaux intermédiaires 448.

Dans l'exemple illustré, l'organe de verrouillage de chaque bloc contacteur 6a à 6d est une tige 618, qui comprend une extrémité basse 620 et une extrémité haute 622 qui est opposée à l'extrémité basse 620 et qui comprend une tête 624 de préhension par un utilisateur. Chaque tige 618 est mobile en translation par rapport au reste de ce bloc contacteur 6a à 6d parallèlement à un axe longitudinal de cette tige, le mouvement de translation des tiges 618 étant représenté par une double flèche droite F618. Dans l'exemple illustré, la tige 618 de chaque bloc contacteur 6a à 6d est verticale lorsque le bloc contacteur 6a à 6d correspondant est en position assemblée.

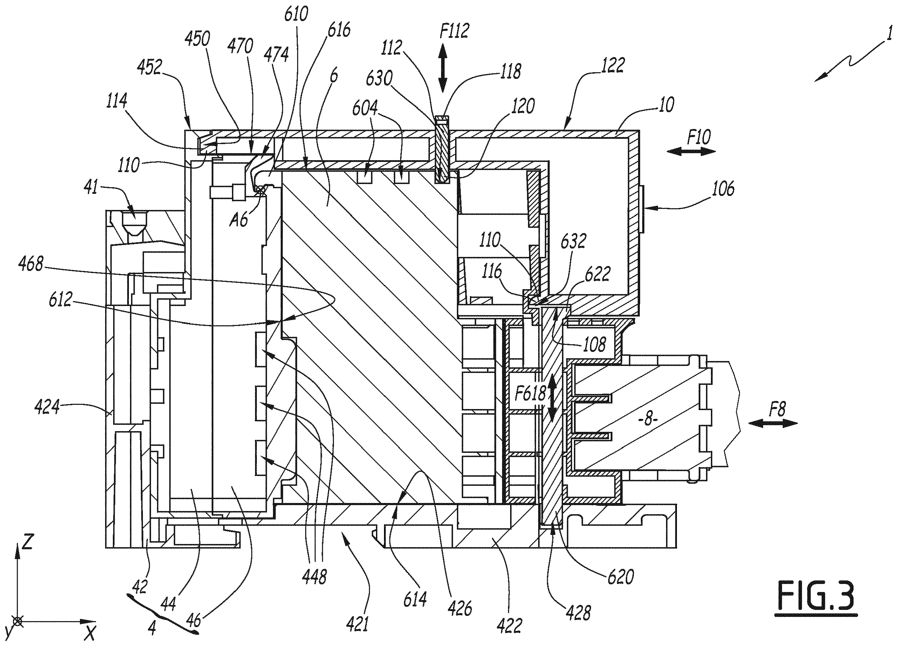

En position verrouillée de l'organe de verrouillage, l'extrémité basse 620 dépasse de la face inférieure 614 du bloc contacteur 6 correspondant. Lorsque le bloc contacteur 6 correspondant est en position assemblée, l'extrémité basse 620 coopère avec un logement 428 ménagé dans la face supérieure 426 de la platine 422. La tige 618 est alors dans une position basse, tel qu'illustré sur la figure 3, et empêche le mouvement de rotation du bloc contacteur 6 correspondant suivant la flèche F6.

Lorsque le bloc de commande 10 est en position assemblée, la tête 624 de chaque tige 618 est reçue dans un logement 108 du bloc de commande 10, de manière que les mouvements de translation de chaque tige 618 suivant la flèche F618 sont empêchés. Ainsi l'organe de verrouillage de chaque bloc contacteur 6 en position assemblée est maintenu en position verrouillée par le bloc de commande 10, ce qui constitue un exemple de coopération mécanique du bloc de commande avec le reste du dispositif 1.

Lorsque le bloc de commande 10 est en position désassemblé, la tête 624 de chaque tige 618 est accessible à un opérateur, qui peut ainsi déplacer la ou les tige(s) 618 de son choix entre la position verrouillée et la position déverrouillée de cette ou ces tige (s), de manière à libérer le mouvement de rotation du ou des bloc(s) contacteur 6 correspondant suivant la flèche F6, indépendamment des autres blocs contacteurs 6. Dans l'exemple illustré, le bloc de commande 10 en position désassemblé laisse un opérateur manipuler la tête 624 d'une tige 618 d'un des blocs contacteurs 6a à 6d, l'opérateur pouvant ainsi déplacer la tige 618 de sa position basse vers sa position haute, dans laquelle l'extrémité basse 620 de la tige 618 n'empêche pas le mouvement de rotation du bloc contacteur 6a à 6d correspondant autour de l'axe A6.

D'autre part, lorsque l'organe de verrouillage de l'un des blocs contacteurs 6a à 6d est en position déverrouillée, cet organe de verrouillage empêche l'assemblage, du bloc de commande 10 au reste du dispositif électrique 1, comme décrit ci-après.

Optionnellement, lorsque l'organe de verrouillage d'un des blocs contacteur 6 est en position verrouillée, le contacteur 8 ou 82 relié à ce bloc contacteur 6 ne peut être démonté, ce qui permet d'éviter un arrachement intempestif du connecteur 8 ou 82 lorsque le bloc contacteur 6 correspondant est en position assemblée.

Le bloc de commande 10 comprend, en outre, des organes de guidage 110 et un organe de blocage 112. Les organes de guidage 110, qui incluent ici un nez 114 configuré pour coopérer avec le logement 450 du support fixe 4 et des ergots 116 coopérant avec des creux 630 ménagés dans chacun des blocs contacteurs 6a à 6d, sont configurés de manière que le mouvement du bloc de commande 10 par rapport au reste du dispositif électrique 1 lors de l'assemblage du bloc de commande 10 est un mouvement de translation. Dans l'exemple illustré, les organes de guidage 110 sont configurés pour guider le bloc de commande 10 en translation par rapport au reste du dispositif 1 parallèlement à la direction de l'axe X, ce mouvement de translation étant représenté par une double flèche F10.

L'organe de blocage 112 est déplaçable par un opérateur entre une position bloquée, dans laquelle l'organe de blocage 112 coopère avec le reste du dispositif électrique 1 de manière que le mouvement de translation du bloc de commande 10 est empêché, et une position débloquée, dans laquelle l'organe de blocage 112 n'empêche pas le mouvement de translation du bloc de commande 10 par rapport au reste du dispositif 1. Autrement dit, l'organe de blocage 112 coopère avec le reste du dispositif électrique 1 de manière que le bloc de commande 10 n'est pas déplaçable par un opérateur entre la position assemblée et la position désassemblée du bloc de commande 10.

Dans l'exemple illustré, l'organe de blocage 112 est un taquet ménagé dans le bloc de commande 10, l'organe de blocage 112 étant mobile en translation par rapport au bloc de commande 10 suivant une direction parallèle à l'axe Z lorsque le bloc de commande 10 est en position assemblée. Le mouvement de translation de l'organe de blocage 112 par rapport au bloc de commande 10 est représentée par une double flèche F112 sur les figures.

L'organe de blocage 112 comprend une extrémité supérieure 118, qui est destinée à être manipulée par un opérateur et qui dépasse d'une face supérieure 122 du bloc de commande 10, et une extrémité inférieure 120, qui coopère avec une gorge 630 ménagée dans la face supérieure 616 de chacun des blocs contacteurs 6a à 6d, en regard de l'extrémité inférieure 120 lorsque le dispositif électrique 1 est en configuration assemblée. La coopération de l'organe de blocage 112 du bloc de commande 10 avec la gorge 630 des blocs contacteurs 6 est un exemple de coopération mécanique du bloc de commande 10 avec le reste du dispositif électrique 1 en position assemblée du bloc de commande.

Avantageusement, le bloc de commande 10 comprend un capteur de position, non représenté, configuré pour déterminer si l'organe de blocage 112 est en position bloquée ou débloquée et pour transmettre cette information au dispositif électronique de contrôle 102. Ainsi, en configuration assemblée du dispositif 1, lorsqu'un utilisateur place l'organe de blocage 112 en position débloquée, le dispositif de contrôle 102 est configuré pour faire passer chaque dispositif de commutation 602 dans sa position ouverte. Optionnellement le bloc de commande 10 comprend un indicateur, par exemple une diode lumineuse, qui informe visuellement un utilisateur de la position bloquée ou débloquée de l'organe de blocage 112.

En fonctionnement normal, le dispositif 1 est en configuration assemblée, tel que représenté sur les figures 2 et 3. Lorsqu'un opérateur souhaite remplacer un des blocs contacteurs 6a à 6d, par exemple le bloc 6a, dans une première étape, l'opérateur commande le dispositif électronique de contrôle 102, par l'intermédiaire de l'interface de communication 106, de faire passer les dispositifs de commutation 602 de chaque bloc contacteur 6 en position ouverte, avant de débloquer l'organe de blocage 112 et de désassembler le bloc de commande 10 par translation suivant la flèche F10.

Alternativement, si l'interface de communication 106 n'est pas disponible, ou bien en cas d'urgence, l'opérateur fait manuellement passer l'organe de blocage 112 en position déverrouillée, le dispositif électronique de contrôle 102 faisant alors passer chaque dispositif de commutation 602 en position ouverte. L'opérateur peut ensuite désassembler le bloc de commande 10 par translation suivant la flèche F10 en toute sécurité.

Dans l'éventualité où le dispositif électronique de contrôle 102 et présente un dysfonctionnement et ne pilote pas les dispositifs de commutation 602 tel qu'attendu lors de la manipulation de l'organe de blocage 112, le désassemblage par l'opérateur du bloc de commande 10 du reste du dispositif 1 déconnecte électriquement l'interface 104 du bloc de commande 10 de l'interface de commande 604 de chaque bloc contacteur 6. La bobine 608 de chaque dispositif de commutation 602 repasse alors en position de repos, et chaque dispositif de commutation 602 est alors en position ouverte.

Grâce à la coopération mécanique et électrique du bloc de commande 10 avec le reste du dispositif électrique 1, l'opérateur bénéficie ainsi de plusieurs niveaux de sécurité lors des opérations de maintenance du dispositif électrique 1, pour garantir le dispositif de commutation 602 de chaque bloc contacteur 6 est en position ouverte lorsque le bloc de commande 10 est en position désassemblée. Le dispositif 1 se retrouve alors dans la configuration représentée sur la figure 4.

Ensuite l'opérateur déverrouille, par translation suivant la flèche F618, l'organe de verrouillage du bloc contacteur 6a à 6d de son choix, pour libérer le mouvement de rotation de ce bloc contacteur autour de l'axe A6. L'opérateur déplace ensuite le bloc contacteur 6d à 6d ainsi déverrouillé par rotation autour de l'axe A6, jusqu'à la position intermédiaire représentée sur la figure 5. Au cours du mouvement de rotation du bloc contacteur 6, les lignes secondaires 646 sont déconnectées des terminaux intermédiaires 448 correspondants.

L'opérateur peut ensuite éloigner le bloc contacteur 6a à 6d du reste du dispositif électrique 1, de manière à désengager la protubérance 610 de la gorge 474. Le bloc contacteur 6 est alors en position désassemblée. L'opérateur déconnecte ensuite le connecteur 8 du bloc contacteur 6 en position désassemblée par translation du connecteur 8 suivant la flèche F8.

Si ce connecteur 8 est connecté à un appareil de puissance, tel que le moteur 2, l'opérateur n'a pas besoin de déconnecter l'appareil de puissance du connecteur 8. Une fois le bloc contacteur 6 remplacé, il suffit à l'opérateur de reconnecter le connecteur 8 au nouveau bloc contacteur 6, ce qui permet de conserver la mémoire de câblage.

Alternativement, une fois l'organe de déverrouillage mis en position déverrouillée, l'opérateur peut déconnecter le connecteur 8 par translation suivant la flèche F8 avant de faire tourner le bloc contacteur 6 correspondant autour de l'axe A6.

Une fois le connecteur 8 reconnecté au nouveau bloc contacteur 6, l'opérateur engage la protubérance 610 dans la gorge 474, le bloc contacteur 6 étant alors en configuration engagée. Puis, par rotation du bloc contacteur 6 autour de l'axe A6, l'opérateur amène le bloc contacteur 6 en butée contre le support fixe 4, le bloc contacteur 6 étant alors en position assemblée. Les lignes secondaires 646 du bloc contacteur 6 sont alors reconnectées aux terminaux intermédiaires 448 du support fixe 4.

L'opérateur verrouille ensuite le bloc contacteur 6 en position assemblée en déplaçant l'organe de verrouillage de ce bloc contacteur 6 depuis sa position déverrouillée vers sa position verrouillée, soit ici par translation de la tige 618 suivant la flèche F618.

Lorsque les organes de verrouillage de tous les blocs contacteurs 6 en positior assemblée sont mis en position verrouillée, l'opérateur assemble le bloc de commande 10 au reste du dispositif 1 par translation suivant la flèche F10, le nez 114 du bloc de commande 10 coopérant avec le logement 450 du support, tandis que les ergots 116 coopèrent chacun avec un logement 108 respectif ménagé dans chaque bloc contacteur.

Lorsque le bloc de commande 10 est en position assemblée, l'opérateur bloque le mouvement de translation du bloc de commande 10 en déplaçant l'organe de blocage 112 de sa position débloquée vers sa position bloquée.

Le dispositif électrique 10 est alors prêt à recevoir des instructions de l'opérateur, par exemple par l'intermédiaire de l'interface de communication 106.

Dans l'exemple illustré, le dispositif électrique 1 présente une longueur, mesurée parallèlement à l'axe Y, égale à 45mm, et comprend quatre blocs contacteurs 6. Chaque bloc contacteur présente une taille adaptée à un environnement industriel et adaptée aux puissances électriques passant par les lignes secondaires 646, le dispositif électrique étant par exemple dimensionné pour un courant triphasé sous une tension allant jusqu'à 500 Volts.

Bien entendu, la forme du dispositif 1 n'est pas limitative, et le dispositif 1 peut présenter d'autres dimensions et un nombre différent de blocs contacteurs 6.

## Revendications

1. Dispositif électrique (1) pour l'alimentation électrique de plusieurs appareils de puissance (2), comprenant un support fixe (4) et plusieurs blocs contacteurs (6), dans lequel :
- le support fixe comprend des terminaux d'entrée (41), pour recevoir un courant de puissance polyphasé, et un circuit de distribution (442) configuré pour répartir le courant de puissance vers des lignes de puissance (444) comprenant chacune plusieurs lignes d'alimentation (446) monophasée, le support fixe comprenant autant de lignes de puissance que le dispositif électrique comprend de blocs contacteurs et chaque ligne de puissance comprenant autant de lignes d'alimentation que le courant de puissance comprend de phases, chacune des lignes d'alimentation d'un bloc contacteur étant reliée à une phase respective du courant de puissance, les lignes d'alimentation (446) étant accessibles à l'extérieur du support fixe par des terminaux intermédiaires (448),
- chaque bloc contacteur (6) comprend des lignes secondaires (646), chacune reliée à une ligne d'alimentation (446) respective par l'intermédiaire d'un terminal intermédiaire respectif, les blocs contacteurs étant déplaçables entre une position assemblée, dans laquelle chaque ligne secondaire est électriquement connectée à une ligne primaire propre par l'intermédiaire d'un terminal intermédiaire et est accessible à l'extérieur du bloc contacteur par un bornier de sortie, et une position désassemblée, dans laquelle chaque ligne secondaire n'est pas reliée à une ligne primaire, chaque bloc contacteur comprenant, en outre, un dispositif de commutation (602), qui est commutable entre une position ouverte, dans laquelle toutes les lignes secondaires (446) de ce bloc contacteur sont ouvertes, et une position fermée, dans laquelle toutes les lignes secondaires de ce bloc contacteur sont fermées et n'empêchent pas le passage du courant entre les terminaux intermédiaires et le bornier de sortie,
**caractérisé**
**en ce que** le dispositif électrique comprend aussi un bloc de commande (10), déplaçable (F10) entre une position assemblée, dans laquelle le bloc de commande coopère mécaniquement et électriquement avec le reste du dispositif électrique, et une position désassemblée, dans laquelle le bloc de commande ne coopère ni mécaniquement ni électriquement avec le reste du dispositif électrique,
**en ce que** lorsque le bloc de commande (10) est en position assemblée, chaque bloc contacteur (6) est, d'une part, maintenu en position assemblée, un dispositif électronique de contrôle (102) du bloc de commande (10) étant aussi connecté au dispositif de commutation (602) de chacun des blocs contacteurs (6), le dispositif électronique de contrôle (102) étant configuré pour piloter la commutation de chaque dispositif de commutation indépendamment des autres dispositifs de commutation,
**en ce que** lorsque le bloc de commande (10) est en position désassemblée, le dispositif de commutation (602) de chacun des blocs contacteurs (6) est à l'état ouvert, tandis que chacun des blocs contacteurs (6) est déplaçable entre sa position assemblée et sa position désassemblée, indépendamment des autres blocs contacteurs,
et **en ce que** la connexion électrique entre les lignes secondaires (646) et les appareils de puissance (2) est assurée par l'intermédiaire de connecteurs (8, 82), chaque connecteur (8, 82) pouvant être déconnecté (F8) du ou des borniers de sortie correspondants lorsque le ou les blocs contacteurs correspondants sont en position désassemblée.

2. Dispositif électrique (1) selon la revendication précédente, caractérisé en ce chaque bloc contacteur (6) comprend un organe de verrouillage, déplaçable (F618) par un opérateur entre une position verrouillée, dans laquelle ce bloc contacteur est maintenu en position assemblée, et une position déverrouillée, dans laquelle ce bloc contacteur est déplaçable entre sa position assemblée et sa position désassemblée,
en ce que lorsque le bloc de commande (10) est en position assemblée, l'organe de verrouillage de chaque bloc contacteur en position assemblée est maintenu er position verrouillée,
et en ce que lorsque le bloc de commande est en position désassemblée, l'organe de verrouillage de chaque bloc contacteur est accessible à un opérateur et est déplaçable (F618) entre la position verrouillée et la position déverrouillée.

3. Dispositif électrique (1) selon la revendication précédente, **caractérisé en ce que** l'organe de verrouillage comprend une tige (618) avec une première extrémité (620) et une deuxième extrémité (622) opposée, la tige étant mobile en translation (F618) par rapport au bloc contacteur (6) correspondant, **en ce que** la première extrémité de l'organe de verrouillage en position verrouillée dépassant d'une face inférieure (614) du bloc contacteur correspondant,
et **en ce qu'**en position assemblée du bloc contacteur (6), la première extrémité (620) de l'organe de verrouillage en position verrouillée coopère avec un logement (428) complémentaire ménagé dans le support fixe (4) de manière à empêcher les mouvements (F6) du bloc contacteur, tandis que la deuxième extrémité (622) est bloquée en translation (F618) par le bloc de commande (10) en position assemblée.

4. Dispositif électrique (1) selon l'une quelconque des revendications précédentes, **caractérisé en ce que** le support (4) comprend une platine (422) et un montant (424) orthogonal à la platine suivant une arête définissant une direction transversale du support,
**en ce qu'**une gorge (474) débouchant sur une face frontale (468) du montant est ménagée dans le montant suivant une direction parallèle à et à distance d'une arête de jonction entre la platine et le montant,
**en ce que** chaque bloc contacteur comprend une protubérance (610), qui coopère avec la gorge dans une configuration engagée du bloc contacteur correspondant, dans laquelle ce bloc contacteur est mobile en rotation (F6) par rapport au support (4) autour de l'axe (A6) de la gorge, ce bloc contacteur étant en position assemblée lorsque ce bloc contacteur est à la fois en configuration engagée et en butée contre le support fixe (4),
et **en ce que** chaque ligne secondaire (646) de ce bloc contacteur est connectée au terminal intermédiaire (448) correspondant lorsque ce bloc contacteur est en configuration engagée et arrive en butée contre le support fixe.

5. Dispositif électrique (1) selon l'une quelconque des revendications précédentes, **caractérisé en ce que** le bloc de commande (10) comprend un organe de blocage (112), déplaçable (F112) par un opérateur entre une position bloquée, dans laquelle l'organe de blocage coopère avec le reste du dispositif électrique de manière que le bloc de commande (1) n'est pas déplaçable (F10) par un opérateur entre la position assemblée et la position désassemblée du bloc de commande, et une position déverrouillée, dans laquelle le bloc de commande est déplaçable par un opérateur entre les positions assemblée et désassemblée de ce bloc de commande.

6. Dispositif électrique (1) selon l'une quelconque des revendications précédentes, **caractérisé en ce que** le support fixe (4) intègre un dispositif de mesure (462), qui est configuré pour mesurer un courant circulant dans chacune des lignes d'alimentation (446) et pour transmettre au dispositif de contrôle (102) des informations relatives aux valeurs des mesures de courant.

7. Dispositif électrique (1) selon la revendication précédente, **caractérisé en ce que** le dispositif de mesure (462) comprend une interface de connexion (466), ménagée dans une partie supérieure (470) du support, et **en ce que** le bloc de commande (10) comprend une interface (166) complémentaire à l'interface de connexion, l'interface de connexion et l'interface complémentaires étant connectées entre elles lorsque le bloc de commande est en position assemblée.

8. Dispositif électrique (1) selon la revendication précédente, **caractérisé en ce que** le bloc de commande (10) comprend des organes de guidage (114, 116) qui coopèrent avec des organes complémentaires (450, 630) ménagés sur le reste du dispositif électrique de manière à guider le bloc de commande (10) lors de l'assemblage au reste du dispositif électrique (1) suivant un mouvement de translation (F10), et **en ce que** la connexion entre l'interface de connexion (466) et l'interface complémentaire (166) se fait conjointement au mouvement de translation (F10) du bloc de commande lors de son assemblage au reste du dispositif.

9. Dispositif électrique (1) selon l'une quelconque des revendications précédentes, **caractérisé en ce que** le dispositif électrique comprend quatre blocs contacteurs (6a, 6b, 6c, 6d).

10. Dispositif électrique selon l'une quelconque des revendications précédentes, **caractérisé en ce que** le bloc de commande (10) comprend une interface de communication (106) reliée au dispositif électronique de contrôle (102), configurée pour permettre à un opérateur d'envoyer des commandes au dispositif électronique de contrôle et de recevoir des informations en provenance du dispositif électronique de contrôle.

## Patentansprüche

1. Elektrische Vorrichtung (1) zur Stromversorgung mehrerer Leistungsgeräte (2), umfassend einen festen Träger (4) und mehrere Schützblöcke (6), wobei:
- der feste Träger Eingangsanschlüsse (41), um einen mehrphasigen Leistungsstrom zu empfangen, und eine Verteilungsschaltung (442), die konfiguriert ist, um den Leistungsstrom auf Leistungsleitungen (444) zu verteilen, die jeweils mehrere einphasige Versorgungsleitungen (446) umfassen, umfasst, der feste Träger umfassend so viele Leistungsleitungen, wie die elektrische Vorrichtung Schützblöcke umfasst, und jede Leistungsleitung umfassend so viele Zuleitungen umfasst, wie der Leistungsstrom Phasen umfasst, wobei jede der Zuleitungen eines Schützblocks mit einer jeweiligen Phase des Leistungsstroms verbunden ist, wobei die Zuleitungen (446) außerhalb des festen Trägers über Zwischenanschlüsse (448) zugänglich sind,
- jeder Schützblock (6) Sekundärleitungen (646) umfasst, die jeweils mittels eines jeweiligen Zwischenanschlusses mit einer jeweiligen Versorgungsleitung (446) verbunden sind, wobei die Schützblöcke zwischen einer zusammengebauten Position, in der jede Sekundärleitung elektrisch mittels eines Zwischenanschlusses mit einer eigenen Primärleitung verbunden ist und außerhalb des Schützblocks mittels einer Ausgangsklemmenleiste zugänglich ist, und einer auseinandergebauten Position bewegbar sind, in der jede Sekundärleitung nicht mit einer Primärleitung verbunden ist, wobei jeder Schützblock ferner eine Schaltvorrichtung (602) umfasst, die zwischen einer offenen Position, in der alle Sekundärleitungen (446) dieses Schützblocks offen sind, und einer geschlossenen Position, in der alle Sekundärleitungen dieses Schützblocks geschlossen sind und den Stromfluss zwischen den Zwischenanschlüssen und der Ausgangsklemmleiste nicht verhindern, umschaltbar ist,
**dadurch gekennzeichnet,**
**dass** die elektrische Vorrichtung auch einen Steuerblock (10) umfasst, der zwischen einer zusammengebauten Position, in der der Steuerblock mechanisch und elektrisch mit dem Rest der elektrischen Vorrichtung zusammenwirkt, und einer auseinandergebauten Position, in der der Steuerblock weder mechanisch noch elektrisch mit dem Rest der elektrischen Vorrichtung zusammenwirkt, bewegbar (F10) ist,
**dass**, wenn der Steuerblock (10) in der zusammengebauten Position ist, jeder Schützblock (6) einerseits in der zusammengebauten Position gehalten wird, wobei eine elektronische Steuervorrichtung (102) des Steuerblocks (10) auch mit der Schaltvorrichtung (602) jedes der Schützblöcke (6) verbunden ist, wobei die elektronische Steuervorrichtung (102) konfiguriert ist, um das Schalten jeder Schaltvorrichtung unabhängig von den anderen Schaltvorrichtungen zu steuern,
**dass**, wenn der Steuerblock (10) in der auseinandergebauten ist, die Schaltvorrichtung (602) von jedem der Schützblöcke (6) in dem offenen Zustand ist, während jeder der Schützblöcke (6) zwischen seiner zusammengebauten Position und seiner auseinandergebauten Position unabhängig von den anderen Schützblöcken bewegbar ist, und dass die elektrische Verbindung zwischen den Sekundärleitungen (646) und den Leistungsgeräten (2) über Verbinder (8, 82) gewährleistet wird, wobei jeder Verbinder (8, 82) von der oder den entsprechenden Ausgangsklemmleisten getrennt werden kann (F8), wenn der oder die entsprechenden Schützblöcke in der auseinandergebauten Position sind.

2. Elektrische Vorrichtung (1) nach dem vorherigen Anspruch, **dadurch gekennzeichnet, dass** jeder Schützblock (6) ein Verriegelungsorgan (F618) umfasst, das von einem Bediener zwischen einer verriegelten Position, in der dieser Schützblock in zusammengebauter Position gehalten wird, und einer entriegelten Position, in der dieser Schützblock zwischen seiner zusammengebauten Position und seiner auseinandergebauten Position bewegbar ist, bewegbar ist,
dass, wenn der Steuerblock (10) in der zusammengebauten Position ist, das Verriegelungsorgan von jedem Schützblock in der zusammengebauten Position in der verriegelten Position gehalten wird,
und dass, wenn sich der Steuerblock in der auseinandergebauten Position befindet, das Verriegelungsorgan von jedem Schützblock für einen Bediener zugänglich ist und zwischen der verriegelten Position und der entriegelten Position bewegbar (F618) ist.

3. Elektrische Vorrichtung (1) nach dem vorherigen Anspruch, **dadurch gekennzeichnet, dass** das Verriegelungsorgan eine Stange (618) mit einem ersten Ende (620) und einem gegenüberliegenden zweiten Ende (622) umfasst, wobei die Stange in Bezug auf den entsprechenden Schützblock (6) translatorisch (F618) bewegbar ist, und dass das erste Ende des Verriegelungsorgans in der verriegelten Position von einer Unterseite (614) des entsprechenden Schützblocks hervorsteht,
und dass in der zusammengebauten Position des Schützblocks (6) das erste Ende (620) des Verriegelungsorgans in der verriegelten Position mit einer komplementären Aufnahme (428) zusammenwirkt, die in dem festen Träger (4) ausgebildet ist, um Bewegungen (F6) des Schützblocks zu verhindern, während das zweite Ende (622) in der zusammengebauten Position durch den Steuerblock (10) in Translation (F618) blockiert wird.

4. Elektrische Vorrichtung (1) nach einem der vorherigen Ansprüche, **dadurch gekennzeichnet, dass** der Träger (4) eine Platine (422) und eine Säule (424) orthogonal zu der Platine entlang einer Kante, die eine Querrichtung des Trägers definiert, umfasst, dass eine Nut (474), die an einer Vorderseite (468) der Säule mündet, in der Säule in einer Richtung parallel zu und in einem Abstand von einer Verbindungskante zwischen der Platine und der Säule ausgebildet ist,
dass jeder Schützblock einen Vorsprung (610) umfasst, der in einer Eingriffskonfiguration des entsprechenden Schützblocks mit der Nut zusammenwirkt, in der dieser Schützblock in Bezug auf den Träger (4) um die Achse (A6) der Nut drehbar (F6) ist, wobei dieser Schützblock in der zusammengebauten Position ist, wenn dieser Schützblock sowohl in der Eingriffskonfiguration als auch in Anlage gegen den festen Träger (4) ist,
und dass jede Nebenleitung (646) dieses Schützblocks mit dem entsprechenden Zwischenanschluss (448) verbunden ist, wenn dieser Schützblock in der eingegriffenen Konfiguration ist und an dem festen Träger anliegt.

5. Elektrische Vorrichtung (1) nach einem der vorherigen Ansprüche, **dadurch gekennzeichnet, dass** der Steuerblock (10) ein Blockierorgan (112) umfasst, das von einem Bediener zwischen einer blockierten Position bewegbar (F112) ist, in der das Blockierorgan mit dem Rest der elektrischen Vorrichtung zusammenwirkt, sodass der Steuerblock (1) von einem Bediener nicht zwischen der zusammengebauten und der auseinandergebauten Position des Steuerblocks bewegbar (F10) ist, und einer entriegelten Position, in der der Steuerblock von einem Bediener zwischen der zusammengebauten und der auseinandergebauten Position dieses Steuerblocks bewegbar ist, bewegbar ist.

6. Elektrische Vorrichtung (1) nach einem der vorherigen Ansprüche, **dadurch gekennzeichnet, dass** der feste Träger (4) eine Messvorrichtung (462) integriert, die konfiguriert ist, um einen in jeder der Versorgungsleitungen (446) fließenden Strom zu messen und Informationen über die Werte der Strommessungen an die Steuervorrichtung (102) zu übertragen.

7. Elektrische Vorrichtung (1) nach dem vorherigen Anspruch, **dadurch gekennzeichnet, dass** die Messvorrichtung (462) eine Verbindungsschnittstelle (466) umfasst, die in einem oberen Teil (470) des Trägers ausgebildet ist, und dass der Steuerblock (10) eine Schnittstelle (166) umfasst, die komplementär zu der Verbindungsschnittstelle ist, wobei die Verbindungsschnittstelle und die komplementäre Schnittstelle miteinander verbunden sind, wenn der Steuerblock in einer zusammengebauten Position ist.

8. Elektrische Vorrichtung (1) nach dem vorherigen Anspruch, **dadurch gekennzeichnet, dass** der Steuerblock (10) Führungsorgane (114, 116) umfasst, die mit komplementären Organen (450, 630) zusammenwirken, die an dem Rest der elektrischen Vorrichtung ausgebildet sind, sodass sie den Steuerblock (10) bei der Montage an den Rest der elektrischen Vorrichtung (1) gemäß einer Translationsbewegung (F10) führen, und dass die Verbindung zwischen der Verbindungsschnittstelle (466) und der komplementären Schnittstelle (166) zusammen mit der Translationsbewegung (F10) des Steuerblocks bei seiner Montage an dem Rest der Vorrichtung erfolgt.

9. Elektrische Vorrichtung (1) nach einem der vorherigen Ansprüche, **dadurch gekennzeichnet, dass** die elektrische Vorrichtung vier Schützblöcke (6a, 6b, 6c, 6d) umfasst.

10. Elektrische Vorrichtung nach einem der vorherigen Ansprüche, **dadurch gekennzeichnet, dass** der Steuerblock (10) eine Kommunikationsschnittstelle (106) umfasst, die mit der elektronischen Steuervorrichtung (102) verbunden ist und konfiguriert ist, um es einem Bediener zu ermöglichen, Befehle an die elektronische Steuervorrichtung zu senden und Informationen von der elektronischen Steuervorrichtung zu empfangen.

## Claims

1. An electrical device (1) for supplying power to a number of power devices (2), comprising a fixed support (4) and a number of contactor units (6), wherein:
- the fixed support comprises input terminals (41), for receiving a polyphase power current, and a distribution circuit (442) configured to distribute the power current to power lines (444) each comprising several single-phase supply lines (446) the fixed support comprising as many power lines as the electrical device comprises contactor blocks and each power line comprising as many supply lines as the power current comprises phases, each of the supply lines of a contactor unit being connected to a respective phase of the power current, the supply lines (446) being accessible outside the fixed support via intermediate terminals (448),
- each contactor unit (6) comprises secondary lines (646), each connected to a respective supply line (446) via a respective intermediate terminal, the contactor blocks being movable between an assembled position, in which each secondary line is electrically connected to its own primary line via an intermediate terminal and is accessible externally from the contactor unit via an output terminal, and a disassembled position, wherein each secondary line is not connected to a primary line, each contactor unit further comprising a switching device (602), which is switchable between an open position, in which all secondary lines (446) of that contactor unit are open, and a closed position, in which all secondary lines of that contactor unit are closed and do not prevent the flow of current between the intermediate terminals and the output terminal block,
**characterized**
**in that** the electrical device further comprises a control unit (10), which is movable (F10) between an assembled position, in which the control unit cooperates mechanically and electrically with the rest of the electrical device, and a disassembled position, in which the control unit does not cooperate mechanically or electrically with the rest of the electrical device,
that when the control unit (10) is in the assembled position, each contactor unit (6) is, on the one hand, held in the assembled position, an electronic control device (102) of the control unit (10) also being connected to the switching device (602) of each of the contactor units (6), the electronic control device (102) being configured to control the switching of each switching device independently of the other switching devices,
that when the control unit (10) is in the disassembled position, the switching device (602) of each of the contactor units (6) is in the open state, while each of the contactor units (6) is movable between its assembled and disassembled positions independently of the other contactor units,
and **in that** the electrical connection between the secondary lines (646) and the power devices (2) is provided via connectors (8, 82), each connector (8, 82) being disconnectable (F8) from the corresponding output terminal block(s) when the corresponding contactor unit(s) is (are) in the disassembled position.

2. The electrical device (1) according to the preceding claim, **characterised in that** each contactor unit (6) comprises a locking member movable (F618) by an operator between a locked position, in which said contactor unit is held in an assembled position, and an unlocked position, in which said contactor unit is movable between its assembled position and its disassembled position,
**in that** when the control unit (10) is in the assembled position, the locking member of each contactor unit in the assembled position is held in the locked position,
and **in that** when the control unit is in the disassembled position, the locking member of each contactor unit is accessible to an operator and is movable (F618) between the locked and unlocked positions.

3. The electrical device (1) according to the preceding claim, **characterised in that** the locking member comprises a rod (618) with a first end (620) and an opposite second end (622), the rod being mobile in translation (F618) with respect to the corresponding contactor unit (6), **in that** the first end of the locking member in the locked position protrudes from a lower face (614) of the corresponding contactor unit,
and **in that**, in the assembled position of the contactor unit (6), the first end (620) of the locking member in the locked position cooperates with a complementary housing (428) formed in the fixed support (4) so as to prevent movements (F6) of the contactor unit, while the second end (622) is blocked in translation (F618) by the control unit (10) in the assembled position.

4. The electrical device (1) according to any of the preceding claims, **characterised in that** the support (4) comprises a plate (422) and a post (424) orthogonal to the plate along an edge defining a transverse direction of the support,
**in that** a groove (474) opening out on a front face (468) of the post is formed in the post in a direction parallel to and at a distance from a connecting edge between the plate and the post,
**in that** each contactor unit comprises a protrusion (610), which cooperates with the groove in an engaged configuration of the corresponding contactor unit, in which this contactor unit is rotatable (F6) with respect to the support (4) about the axis (A6) of the groove, this contactor unit being in the assembled position when this contactor unit is both in the engaged configuration and in abutment against the fixed support (4),
and **in that** each secondary line (646) of this contactor unit is connected to the corresponding intermediate terminal (448) when this contactor unit is in the engaged configuration and abuts the fixed support.

5. The electrical device (1) according to any of the preceding claims, **characterised in that** the control unit (10) comprises a locking member (112), movable (F112) by an operator between a locked position, in which the locking member co-operates with the remainder of the electrical device such that the control unit (1) is not movable (F10) by an operator between the assembled and disassembled positions of the control unit, and an unlocked position, in which the control unit is movable by an operator between the assembled and disassembled positions of the control unit.

6. The electrical device (1) according to any one of the preceding claims, **characterised in that** the fixed support (4) incorporates a measuring device (462), which is configured to measure a current flowing in each of the supply lines (446) and to transmit to the control device (102) information relating to the values of the current measurements.

7. The electrical device (1) according to the preceding claim, **characterised in that** the measuring device (462) comprises a connection interface (466), provided in an upper part (470) of the support, and **in that** the control unit (10) comprises an interface (166) complementary to the connection interface, the connection interface and the complementary interface being connected to each other when the control unit is in the assembled position.

8. The electrical device (1) according to the preceding claim, **characterised in that** the control unit (10) comprises guide members (114, 116) which mate with complementary members (450, 630) provided on the rest of the electrical device so as to guide the control unit (10) during assembly to the rest of the electrical device (1) according to a translational movement (F10), and **in that** the connection between the connection interface (466) and the complementary interface (166) is made in conjunction with the translational movement (F10) of the control unit when assembled to the rest of the device.

9. The electrical device (1) according to any of the preceding claims, **characterised in that** the electrical device comprises four contactor units (6a, 6b, 6c, 6d).

10. The electrical device according to any of the preceding claims, **characterised in that** the control unit (10) comprises a communication interface (106) connected to the electronic control device (102), configured to allow an operator to send commands to the electronic control device and to receive information from the electronic control device.
